# EUROPÄISCHE PATENTSCHRIFT

(11) **EP 3 844 823 B1**
(45) Veröffentlichungstag und Bekanntmachung des Hinweises auf die Patenterteilung: **18.02.2026**
(21) Anmeldenummer: 19765186.2
(22) Anmeldetag: 28.08.2019
(51) Int. Cl.: H01M 10/6563, H01M 10/613, H01M 10/625, H01M 10/42, H01M 10/48, H01M 10/617, H01M 10/63, H01M 10/653, H01M 50/224, H01M 50/271, H01M 10/643, H01M 10/655, H01M 50/213

(54) **BATTERIESYSTEM UND VERFAHREN ZUR HOMOGENEN TEMPERATURVERTEILUNG INNERHALB DES BATTERIESYSTEMS, VERWENDUNG DES BATTERIESYSTEMS UND FAHRZEUG DAMIT**
BATTERY SYSTEM AND METHOD FOR HOMOGENEOUS TEMPERATURE DISTRIBUTION WITHIN THE BATTERY SYSTEM, USE OF THE BATTERY SYSTEM AND VEHICLE THEREWITH
SYSTÈME DE BATTERIE ET MÉTHODE DE DISTRIBUTION HOMOGÈNE DE LA TEMPÉRATURE AU SEIN DU SYSTÈME DE BATTERIE, UTILISATION DU SYSTÈME DE BATTERIE ET DU VÉHICULE QUI LE CONTIENT

(30) Priorität: 30.08.2018 DE 102018214722
(43) Veröffentlichungstag der Anmeldung: 07.07.2021
(73) Patentinhaber: Robert Bosch GmbH, 70442 Stuttgart (DE)
(72) Erfinder: DROIGK, Thorsten, 1103 Budapest (HU); DETTLING, Tim, 71711 Murr (DE); LORENZ, Enno, 70469 Stuttgart-Feuerbach (DE)
(86) Internationale Anmeldenummer: PCT/EP2019/072937
(87) Internationale Veröffentlichungsnummer: WO 2020/043767

(56) Entgegenhaltungen:
- EP-A1- 3 125 355
- US-A1- 2011 020 676
- US-A1- 2013 149 583
- US-A1- 2017 069 888

## Beschreibung

### Stand der Technik

Die Erfindung betrifft ein Batteriesystem und ein Verfahren zur homogenen Temperaturverteilung innerhalb des Batteriesystems.

Batterien für mobile Anwendungen umfassen in der Regel eine Vielzahl von Batteriezellen. Diese Batteriezellen sind bezüglich der Spannung und der zulässigen Ströme limitiert. Um eine für einen vorgegebenen Anwendungsfall erforderliche Gesamtspannung und Gesamtkapazität der Batterie zu erreichen, werden die einzelnen Batteriezellen auf eine bestimmte Weise verschaltet. Eine serielle Verschaltung erhöht die erforderliche Gesamtspannung und eine parallele Verschaltung erhöht die erforderliche Gesamtkapazität, sowie die zulässigen Gesamtströme.

Zur Erzielung einer möglichst hohen Energiedichte werden einzelne Batteriezellen dicht zueinander in einem Batteriezellenverbund angeordnet. Im Betrieb weist jede einzelne Batteriezelle eine bestimmte Verlustleistung auf. Diese Verlustleistung wird in Form von Abwärme in den Innenraum des Batteriegehäuses abgegeben. Da die Abwärme an verschiedenen Stellen der Batterie unterschiedlich gut an die Umwelt abgeführt werden kann, entsteht eine inhomogene Temperaturverteilung innerhalb eines geschlossenen Batteriegehäuses.

Nachteilig ist hierbei, dass die Leistung der Batterie, sowie deren Lebenszeit beeinträchtigt werden.

Gefahrlos können die einzelnen Batteriezellen nur bis zu einer bestimmten Temperatur betrieben werden. Weder für den Ladevorgang noch für den Entladevorgang dürfen die einzelnen Batteriezellen somit diese bestimmte Temperatur überschreiten, um die Sicherheit der Batterie zu gewährleisten. Wird die bestimmte Temperatur während des Entladevorgangs von einer Batteriezelle erreicht, so wird der Entladestrom der Batterie gedrosselt. Befindet sich die Batterie im Lademodus, wird der Ladevorgang nur gestartet, wenn die aktuelle Temperatur der Batteriezellen unterhalb der bestimmten Temperatur liegt.

Aufgrund der inhomogenen Temperaturverteilung befinden sich nur einzelne Batteriezellen im Bereich der Grenztemperatur des zulässigen Betriebs während andere Batteriezellen moderate Betriebstemperaturen aufweisen. Das Batteriemanagementsystem drosselt jedoch die Leistung der gesamten Batterie, sobald sich eine Batteriezelle im kritischen Bereich der Grenztemperatur befindet.

Nachteilig ist hierbei, dass eine frühzeitige Drosselung der Batterieleistung erfolgt.

Auch für die Lebensdauer einer Batteriezelle spielt die Betriebstemperatur eine wichtige Rolle. Die Alterung einer Batteriezelle erfolgt bei hohen Betriebstemperaturen sehr schnell. Aufgrund der inhomogenen Temperaturverteilung innerhalb des geschlossenen Batteriegehäuses altern die Batteriezellen, die eine geringere Betriebstemperatur aufweisen deutlich langsamer als Batteriezellen, die eine hohe Betriebstemperatur aufweisen. Da die Batteriezellen in solch einem Batteriezellenverbund nicht ausgetauscht werden bzw. austauschbar sind, wird die gesamte Batterie außer Betrieb gesetzt, sobald eine bestimmte Anzahl an Batteriezellen ihr Lebensende erreicht haben. Zu diesem Zeitpunkt könnten jedoch alle anderen bzw. weiteren Batteriezellen noch eine Zeit lang gefahrlos betrieben werden.

Um diese Nachteile zu überwinden, sind verschiedene Kühlarten bekannt. In den meisten Fällen wird dabei eine Luftkühlung oder eine Flüssigkeitskühlung verwendet. Zu diesem Zweck wird Luft mit Hilfe eines Gebläses aus der Umgebung angesaugt und über die Batteriezellen geführt. Die angesaugte Luft wird dabei durch die Abwärme der einzelnen Batteriezellen erwärmt und tritt nach Passieren des Batteriezellenverbunds durch eine Austrittsöffnung aus dem Batteriegehäuse wieder aus. Die Wärme wird somit an die Umgebung abgegeben.

Das Dokument US 2003198864 A1 beschreibt eine elektrochemische Batterie, die ein Batteriegehäuse mit einer Vielzahl von Batteriezellen und einen zentralen Lüfter umfasst. Mit Hilfe des Lüfters wird ein Luftstrom zwischen einer Lufteinlassöffnung des Batteriegehäuses und einer Luftauslassöffnung des Batteriegehäuses erzeugt, der über die Batteriezellen geführt wird, wodurch die Batteriezellentemperatur reguliert wird.

Das Dokument US 2013149583 A1 offenbart ein Batteriesystem mit einer Vielzahl von elektrischen Zellen, einem Batteriegehäuse und einem Lüfter. Ein Bereich des Batteriegehäuses, das unterhalb der Batteriezellen angeordnet ist, umfasst eine Einlassöffnung für Luft. Die Seitenwände, sowie ein Bereich des Batteriegehäuses oberhalb der Batteriezellen weisen Austrittsöffnungen für die Luft auf.

Nachteilig ist in beiden Dokumenten, dass Einlassöffnungen und Auslassöffnungen für die Luft in das Batteriegehäuse eingefügt werden müssen. Ein weiterer Nachteil ist, dass das Batteriegehäuse dadurch undicht wird.

Die Aufgabe der Erfindung ist es, diese Nachteile zu überwinden.

Stand der Technik hierzu sind auch die Druckschriften US 2013 / 149583 A1 sowie US 2017/069888 A1.

### Offenbarung der Erfindung

Ein Batteriesystem umfasst ein metallisches Batteriegehäuse mit einem Grundkörper, der ein erstes Abdeckelement und ein zweites Abdeckelement aufweist. Das erste Abdeckelement verschließt eine erste offene Stirnseite des Grundkörpers. Das zweite Abdeckelement verschließt eine zweite offene Stirnseite des Grundkörpers. Das Batteriegehäuse ist gegenüber der Umgebung luftdicht verschlossen. Das Batteriesystem umfasst einen Batteriezellenhalter, der eine Vielzahl von Batteriezellen aufweist, wobei der Batteriezellenhalter innerhalb des Batteriegehäuses angeordnet ist und ein Batteriemanagementsystem, das dazu eingerichtet ist, die Vielzahl der Batteriezellen zu überwachen und Temperaturen der einzelnen Batteriezellen zu erfassen. Erfindungsgemäß ist mindestens ein Lüfter innerhalb des Batteriegehäuses angeordnet, wobei der mindestens eine Lüfter in Abhängigkeit einer Schwellenwertüberschreitung der Temperatur der einzelnen Batteriezellen vom Batteriemanagementsystem ansteuerbar ist. Mit anderen Worten die Temperaturumverteilung erfolgt innerhalb des geschlossenen Batteriegehäuses durch eine zirkulierende Luftbewegung der in der Batterie bzw. dem Batteriesystem entstehenden Wärme.

Der Vorteil ist hierbei, dass die durch den Betrieb der Batteriezellen entstehende Abwärme innerhalb der Batterie homogen umverteilt wird und die homogen verteilte Wärme durch die Gehäuseoberfläche an die Umgebung abgegeben wird, sodass die einzelnen Batteriezellen gleichmäßig altern und eine Drosselung der Batterieleistung erst nach längerer Betriebszeit erfolgt. Das bedeutet eine mittelschnelle Erhitzung aller Batteriezellen statt einer schnellen Erhitzung der Batteriemitte und eine langsame Erhitzung in den Randbereichen. Außerdem führt eine verbesserte Temperaturverteilung bzw. ein schnelles Abkühlen der Batterie dazu, dass die Batterie schnell in einen ladefähigen Zustand tritt. Des Weiteren ist es vorteilhaft, dass keine Öffnungen für den Einlass und den Auslass eines Kühlfluids benötigt werden. Außerdem werden weder Verdampfer noch Kondensatoren benötigt, wodurch das Gesamtsystem ein geringes Gewicht aufweist und kostengünstig ist. Das Batteriesystem ist somit auch für kleine Batterieanwendungen wie 48V-Systeme geeignet.

In einer Weiterbildung ist der mindestens eine Lüfter zwischen dem Batteriegehäuse und dem Batteriezellenhalter angeordnet.

Vorteilhaft ist hierbei, dass die Anordnung bauraumneutral gegenüber einem Batteriegehäuse mit Batteriezellenhalter ohne Lüfter ist, da der Lüfter in einem freien Zwischenraum zwischen Batteriegehäuse und Batteriezellenhalter angeordnet ist.

Erfindungsgemäß ist der mindestens eine Lüfter auf dem Batteriezellenhalter angeordnet.

Der Vorteil ist hierbei, dass der Batteriezellenhalter nicht konstruktiv verändert werden muss.

In einer Weiterbildung ist der mindestens eine Lüfter in Form eines Radiallüfters ausgestaltet.

Der Vorteil ist hierbei, dass der Lüfter gezielt an temperaturkritischen Stellen der Batterie angeordnet werden kann.

In einer weiteren Ausgestaltung weist das zweite Abdeckelement mindestens einen weiteren Lüfter auf. Mit anderen Worten, der mindestens eine weitere Lüfter ist auf dem zweiten Abdeckelement innerhalb des Batteriegehäuses angeordnet.

Der Vorteil ist hierbei, dass der mindestens eine weitere Lüfter bauraumtechnisch nur durch die Größe des zweiten Abdeckelement limitiert sind. Es können daher große Volumenströme erzeugt werden.

In einer Weiterbildung ist der Grundkörper ein Strangusselement.

Vorteilhaft ist hierbei, dass das Batteriegehäuse auf einfache und kostengünstige Weise hergestellt wird.

In einer weiteren Ausgestaltung umfasst das Batteriegehäuse Aluminium.

Der Vorteil ist hierbei, dass die homogen verteilte Wärme innerhalb des Batteriegehäuses durch die wärmeleitfähige Oberfläche des Grundkörpers schnell nach außen, d. h. außerhalb des Batteriegehäuses, abgeführt werden kann.

Das erfindungsgemäße Verfahren zur homogenen Temperaturverteilung innerhalb eines Batteriesystems, wobei das Batteriesystem ein Batteriegehäuse, einen Batteriezellenhalter mit einer Vielzahl von Batteriezellen, wobei der Batteriezellenhalter innerhalb des Batteriegehäuses angeordnet ist und ein Batteriemanagementsystem aufweist, das dazu eingerichtet ist, die Vielzahl der Batteriezellen zu überwachen und Temperaturdifferenzen zwischen den einzelnen Batteriezellen zu erfassen, umfasst, dass mindestens ein Lüfter innerhalb des Batteriegehäuses in Abhängigkeit der Temperaturdifferenzen zwischen den einzelnen Batteriezellen vom Batteriezellenmanagement angesteuert wird.

Die erfindungsgemäße Verwendung des erfindungsgemäßen Batteriesystems erfolgt in einem Elektrofahrzeug, insbesondere einem elektrisch betriebenen Zweirad.

Das erfindungsgemäße Fahrzeug, insbesondere ein elektrisch betriebenes Zweirad, weist das erfindungsgemäße Batteriesystem auf.

Weitere Vorteile ergeben sich aus der nachfolgenden Beschreibung von Ausführungsbeispielen bzw. den abhängigen Patentansprüchen.

### Kurze Beschreibung der Zeichnungen

Die vorliegende Erfindung wird nachfolgend anhand bevorzugter Ausführungsformen und beigefügter Zeichnungen erläutert. Es zeigen:
- Figur 1: eine Draufsicht auf eine Temperaturverteilung eines Batteriesystems mit einer Vielzahl von Batteriezellen, die seriell und parallel zueinander verschaltet sind,
- Figur 2: ein Batteriesystem mit mindestens einem Lüfter,
- Figur 3: das thermische Verhalten eines erfindungsgemäßen Batteriesystems mit Lüfter, wobei die Volumenströme des Lüfters unterschiedlich sind, und
- Figur 4: ein Verfahren zur homogenen Temperaturverteilung innerhalb eines Batteriesystems mit mindestens einem Lüfter.

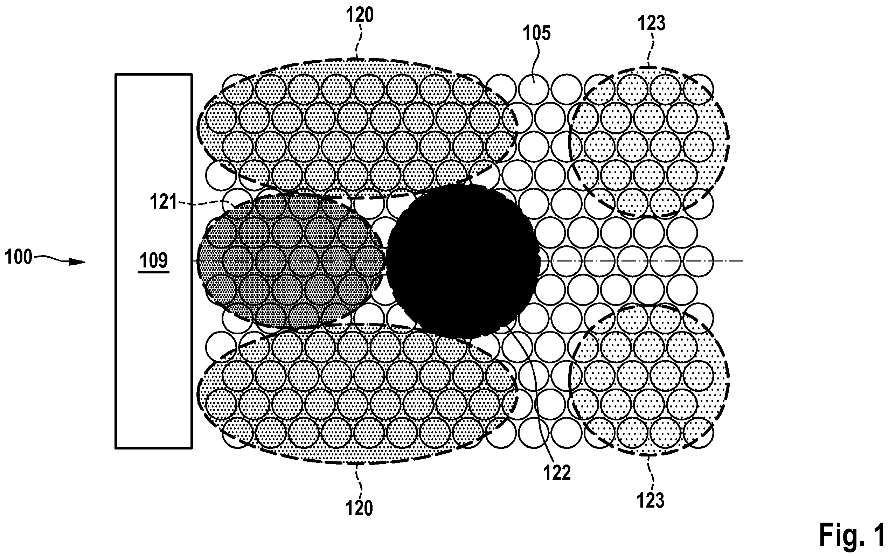

Figur 1 zeigt eine Draufsicht auf eine beispielhafte Temperaturverteilung eines 48 V liefernden Batteriesystems 100 mit einer Vielzahl von Batteriezellen 105. Das Batteriesystem umfasst dreizehn Reihen von jeweils fünfzehn parallel zueinander geschalteten Batteriezellen 105, die einen Batteriezellenverbund bilden. Jede Batteriezelle 105 liefert hierbei eine Spannung von ca. 3,6 V, sodass die Batterie eine Gesamtspannung von 48 V liefern kann. Aufgrund der dichten Anordnung der Batteriezellen 105 ergeben sich im Betrieb des Batteriesystems 100 durch die von den einzelnen Batteriezellen abgegebene Abwärme verschiedene Temperaturbereiche innerhalb des in Figur 1 nicht gezeigten Batteriegehäuses. Beispielhaft sind in Figur 1 erste Temperaturbereiche 120, ein zweiter Temperaturbereich 121, ein dritter Temperaturbereich 122 und vierte Temperaturbereiche 123 gezeigt. Die ersten Temperaturbereiche 120 weisen eine niedrigere Temperatur auf als der zweite Temperaturbereich 121 und der dritte Temperaturbereich 122. Die vierten Temperaturbereiche 123 sind am kältesten. Der Grund hierfür ist, dass die Batteriezellen 105, die am Rand des Batteriezellenverbunds angeordnet sind, die Abwärme schneller an das Batteriegehäuse abgeben können als die Batteriezellen 105, die im Inneren des Batteriezellenverbunds angeordnet sind. Das Batteriemanagementsystem 109 fungiert zusätzlich als Wärmequelle.

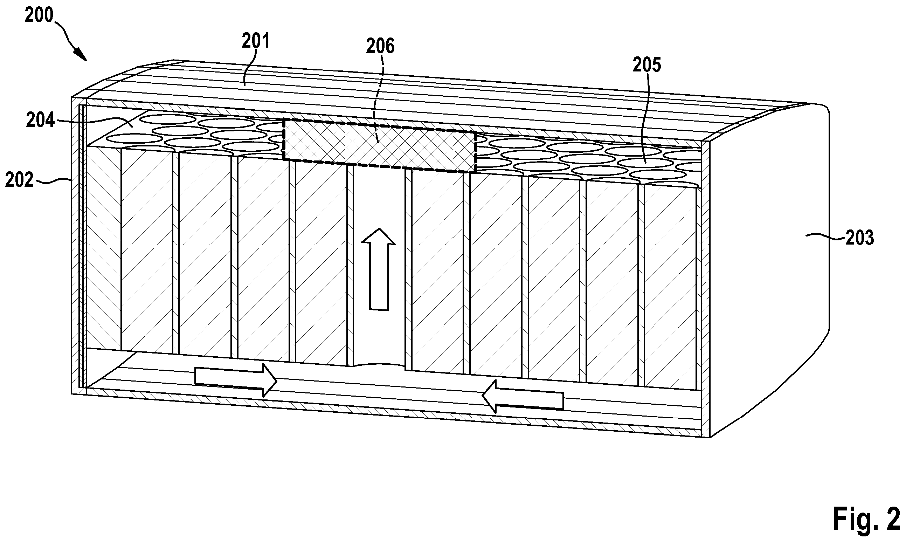

Figur 2 zeigt ein Batteriesystem 200 mit einem Batteriegehäuse, das einen Grundkörper 201, ein erstes Abdeckelement 202 und ein zweites Abdeckelement 203 umfasst. Das erste Abdeckelement 202 verschließt eine erste offene Stirnseite des Grundkörpers 201 und umfasst ein hier nicht gezeigtes Batteriemanagementsystem, das zweite Abdeckelement 203 verschließt eine zweite offene Stirnseite des Grundkörpers 201. Somit bildet das Batteriegehäuse einen geschlossenen Raum, der als Aufnahmeraum für einen Batteriezellenhalter 204 fungiert. Das Batteriegehäuse ist somit gegenüber der Umgebung abgedichtet bzw. luftdicht verschlossen. Der Batteriezellenhalter 204 füllt den Aufnahmeraum des Batteriegehäuses nicht vollständig aus. Das bedeutet das Batteriegehäuse und der Batteriezellenhalter 204 sind parallel zu den Stirnseiten beabstandet zueinander angeordnet. Mit anderen Worten es befinden sich oberhalb und unterhalb des im Batteriegehäuse aufgenommenen Batteriezellenhalters leere Zwischenräume bzw. Hohlräume. Der Batteriezellenhalter 204 weist Aufnahmebereiche für eine Vielzahl von Batteriezellen 205 auf. Der mindestens eine Lüfter 206 ist zwischen dem Batteriezellenhalter 204 und dem Batteriegehäuse angeordnet. Der Lüfter 206 kann beispielsweise auf dem Batteriezellenhalter 204 angeordnet sein und ist beispielsweise ein Radiallüfter. Mindestens ein Aufnahmebereich des Batteriezellenhalters 204, der sich unmittelbar unterhalb des mindestens einen Lüfters befindet, weist keine Batteriezelle bzw. keine Batteriezellen auf. Das bedeutet der Aufnahmebereich ist leer und fungiert als Luftansaugbereich für den Lüfter 206. Dies ermöglicht die Ansaugung der Wärme bzw. Warmluft durch den Batteriezellenhalter 204. Eine Zirkulation der Warmluft wird dadurch ermöglicht, dass zwischen dem ersten Abdeckelement 202 und dem Batteriezellenhalter 204, sowie zwischen dem Batteriezellenhalter 204 und dem zweiten Abdeckelement 203 Freiräume für die Luftumwälzung durch an dieser Stelle angeordnete Dämpfungsmaterialien bestehen. Somit kann der Lüfter 206 eine zirkulierende Luftbewegung innerhalb des Batteriegehäuses erzeugen. Der Luftstrom stellt dabei eine reine Umwälzung der innerhalb der Batterie befindlichen Luft dar. Dadurch wird die Warmluft innerhalb der Batterie zwischen Bereichen hoher und tiefer Temperatur ausgetauscht, sodass sich die verschiedenen Temperaturbereiche innerhalb der Batterie angleichen. Mit anderen Worten die Abwärme der Batteriezellen 205 wird innerhalb der Batterie umverteilt. Um die Verteilung der Wärme verbessern zu können, werden zusätzlich weitere Aufnahmebereiche des Batteriezellenhalters 204 freigelassen, d. h. in diese Aufnahmebereiche werden keine Batteriezellen eingefügt. Dabei handelt es sich beispielsweise um Aufnahmebereiche, die sich räumlich in der Nähe des Lüfters 206 befinden. Alternativ oder zusätzlich kann der Batteriezellenhalter Luftkanäle aufweisen, die zwischen den einzelnen Batteriezellen 205 im Batteriezellenhalter 204 angeordnet sind, sodass eine optimale Umströmung der einzelnen Batteriezellen 205 erfolgt. Diese Luftkanäle können auch nur an den Stellen des Batteriezellenhalters 204 vorhanden sein, an denen die Betriebstemperatur der Batteriezellen 205 sehr hoch ist, beispielsweise in dem in Figur 1 gezeigten dritten Temperaturbereich 122. Alternativ oder zusätzlich kann ein weiterer Lüfter auf dem zweiten Abdeckelement 203 angeordnet sein.

Anhand von Pfeilen ist die Zirkulation in Figur 2 innerhalb des Batteriegehäuses durch den Batteriezellenhalter 204 unterhalb des Lüfters 206 dargestellt. Die Temperaturen innerhalb des Batteriegehäuses werden beispielsweise mittels NTCs an verschiedenen Stellen des Batteriezellenverbunds erfasst. Der Lüfter 206 wird dabei vom Batteriemanagementsystem in Abhängigkeit einer Schwellenwertüberschreitung der Temperaturen der Batteriezellen 205 gesteuert. Durch die Umwälzung wird die Luft am Grundkörper des Batteriegehäuses entlanggeführt, sodass die umverteilte Wärme passiv über die Oberfläche des Batteriegehäuses abgegeben wird.

Der Grundkörper 201 des Batteriegehäuses ist einstückig und rohrförmig ausgestaltet und weist ein Metall auf. Das Metall kann beispielsweise Aluminium oder Mangan umfassen. Der Grundkörper 201 kann mit Hilfe eines Stanggussverfahrens hergestellt werden.

Die Erfindung kann auch auf Modulebene verwendet werden, wobei die Batteriezellen durch Batteriemodule zu ersetzen sind. Dabei wird der Lüfter innerhalb der einzelnen Batteriemodule, die jeweils ein eigenes Gehäuse aufweisen, angeordnet.

Ein weiteres Ausführungsbeispiel umfasst den Einbau eines Lüfters auf Batteriepackebene, der die Temperatur der einzelnen Batteriemodule homogenisiert. In diesem Fall muss der Batteriezellenhalter durch ein Aufnahmeelement für Batteriemodule ersetzt werden bzw. derart ausgestaltet sein, dass er Batteriemodule aufnehmen kann.

Das Batteriesystem findet beispielsweise Anwendung in einem elektrisch betriebenen Zweirad. Des Weiteren kann das Batteriesystem auch in stationären Vorrichtungen Anwendung finden, z. B. in Hauspufferspeichern.

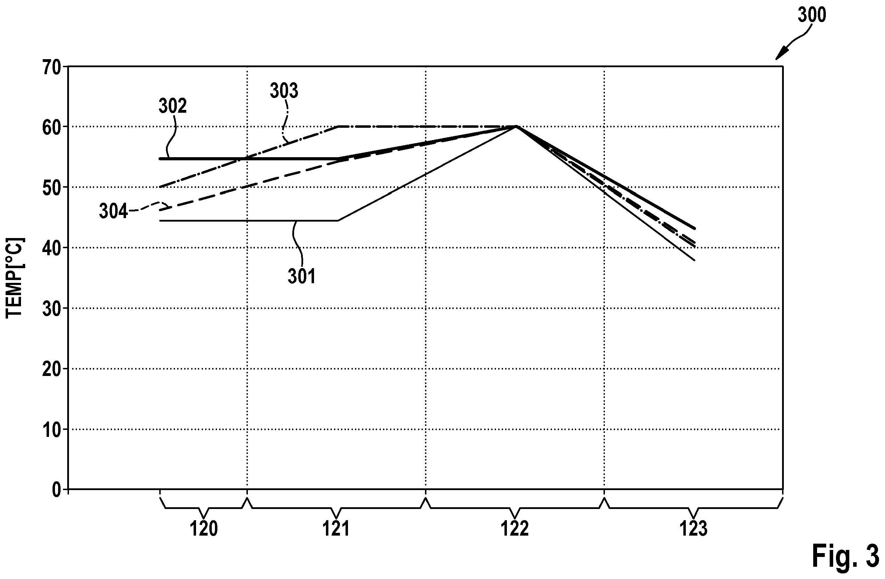

Figur 3 zeigt das thermische Verhalten 300 eines Batteriesystems mit Lüfter, wobei die Volumenströme des Lüfters verschieden sind. Die Abwärme einer jeden Batteriezelle betragt ca. 1, 36 W. Gezeigt ist hier der Betriebszustand während eines Entladevorgangs, bei dem an einer Stelle der Batterie erstmalig ein Temperaturschwellenwert von 60°C erreicht bzw. überschritten wird. Dies geschieht im Allgemeinen in einer der zentral angeordneten Batteriezellen. Figur 3 zeigt das thermische Verhalten der aus Figur 1 bekannten Temperaturbereiche, nämlich den ersten Temperaturbereichen 120, dem zweiten Temperaturbereich 121, dem dritten Temperaturbereich 122 und den vierten Temperaturbereichen 123. Die Abszisse repräsentiert die einzelnen Temperaturbereiche und die Ordinate die zugehörigen Temperaturwerte. Eine erste Kurve 301 repräsentiert das thermische Verhalten der Batterie ohne Lüfter. Eine zweite Kurve 302 zeigt das thermische Verhalten der Batterie mit einem Lüfter, der einen Volumenstrom von 0,72 m³/h aufweist. Der Kurvenverlauf in den Temperaturbereichen 120 und 121 lässt sich dadurch erklären, dass sich die Randbereiche aufgrund des geringen Volumenstroms des Lüfters bereits erwärmt haben, wenn die Batteriemitte 60°C aufweist. Eine dritte Kurve 303 zeigt das thermische Verhalten der Batterie mit einem Lüfter, der einen Volumenstrom von 3,18 m³/h aufweist und eine vierte Kurve 304 zeigt das thermische Verhalten der Batterie mit einem Lüfter, der einen Volumenstrom von 9,6 m³/h aufweist. Die Temperaturunterschiede innerhalb der Batterie werden somit von 21,6 K auf 16,4K gesenkt, d. h. es liegt eine deutliche Homogenisierung der Temperaturverteilung innerhalb des Batteriegehäuses vor.

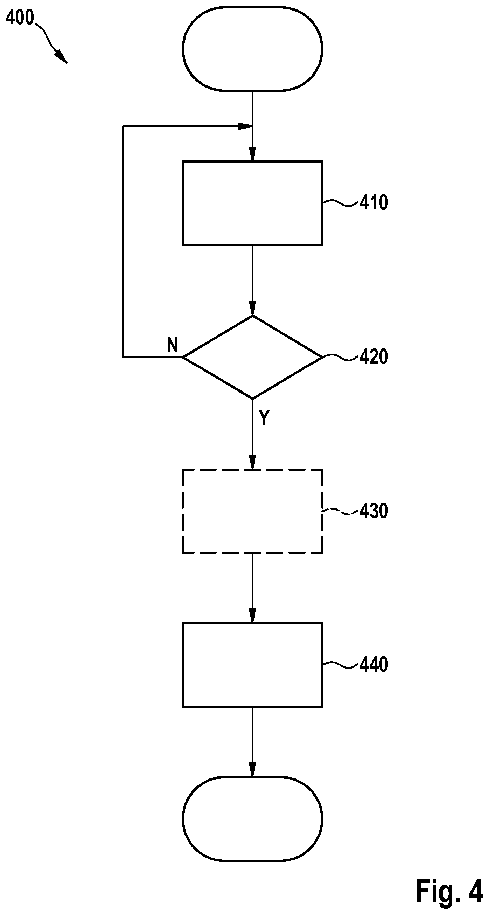

Figur 4 zeigt ein Verfahren 400 zur homogenen Temperaturverteilung innerhalb eines Batteriesystems mit mindestens einem Lüfter, wobei das Batteriesystem ein Batteriegehäuse, einen Batteriezellenhalter mit einer Vielzahl von Batteriezellen aufweist, der innerhalb des Batteriegehäuses angeordnet ist und ein Batteriemanagementsystem aufweist, das dazu eingerichtet ist die Vielzahl von Batteriezellen zu überwachen. Das Verfahren 400 startet mit dem Schritt 410, indem das Batteriemanagementsystem Temperaturen der einzelnen Batteriezellen erfasst. In einem folgenden Schritt 420 wird geprüft, ob eine der Temperaturen einen bestimmten Schwellenwert überschreitet. Der vorbestimmte Schwellenwert ist beispielsweise eine vom Hersteller der Batteriezelle vorgegebene maximal zulässige Betriebstemperatur bzw. Grenztemperatur der Batteriezelle. Alternativ kann sie auch durch das Batteriesystem für den aktuellen Betriebszustand der Batterie, d.h. Laden oder Entladen, vorgegeben werden. Für den Ladevorgang liegt der bestimmte Schwellenwert bei 40°C und für den Entladevorgang liegt der bestimmte Schwellenwert bei ca. 60°C. Wird der bestimmte Schwellenwert erreicht, wird in einem folgenden Schritt 440 der mindestens eine Lüfter angesteuert. Ist dies nicht der Fall, wird das Verfahren mit dem Schritt 410 fortgesetzt.

Weist das Batteriesystem mehrere Lüfter auf wird in einem Schritt 430, der auf den Schritt 420 folgt, der Bereich des Batteriezellenverbunds bestimmt, in dem die Temperaturschwellenwertüberschreitung mindestens einer Batteriezelle stattfindet. Im folgenden Schritt 440 werden der oder die Lüfter angesteuert, die diesem betroffenen Bereich am nächsten liegen bzw. die die Abwärme am schnellsten umverteilen können. Hierbei werden Lüfter gleichzeitig sowohl in den heißeren als auch in den kälteren Bereichen betrieben, sodass ein hoher Temperaturgradient entsteht, der zu einer schnellen Abkühlung bzw. Homogenisierung der Temperaturverteilung innerhalb des Batteriesystems führt.

## Patentansprüche

1. Batteriesystem (200) mit
• einem metallischen Batteriegehäuse, das einen Grundkörper (201), ein erstes Abdeckelement (202) und ein zweites Abdeckelement (203) umfasst, wobei das erste Abdeckelement (202) eine erste offene Stirnseite des Grundkörpers (201) verschließt und das zweite Abdeckelement (203) eine zweite offene Stirnseite des Grundkörpers (201) gegenüber der Umgebung luftdicht verschließt,
• einem Batteriezellenhalter (204), der eine Vielzahl von Batteriezellen (205) aufweist, wobei der Batteriezellenhalter (204) innerhalb des Batteriegehäuses angeordnet ist, und
• einem Batteriemanagementsystem (109), das dazu eingerichtet ist, die Vielzahl von Batteriezellen (205) zu überwachen und Temperaturen der einzelnen Batteriezellen (205) zu erfassen,
• mindestens ein Lüfter (206) innerhalb des Batteriegehäuses angeordnet ist und der mindestens eine Lüfter (206) in Abhängigkeit einer Schwellenwertüberschreitung der Temperaturen der einzelnen Batteriezellen (205) vom Batteriemanagementsystem (109) ansteuerbar ist,
**dadurch gekennzeichnet, dass**
der mindestens eine Lüfter (206) auf dem Batteriezellenhalter (204) angeordnet ist.

2. Batteriesystem (200) nach Anspruch 1, **dadurch gekennzeichnet, dass** der mindestens eine Lüfter (206) zwischen dem Batteriegehäuse und dem Batteriezellenhalter (204) angeordnet ist.

3. Batteriesystem (200) nach einem der vorhergehenden Ansprüche, **dadurch gekennzeichnet, dass** der mindestens eine Lüfter (206) ein Radiallüfter ist.

4. Batteriesystem (200) nach einem der vorhergehenden Ansprüche, **dadurch gekennzeichnet, dass** das zweite Abdeckelement (203) mindestens einen weiteren Lüfter aufweist.

5. Batteriesystem (200) nach einem der vorhergehenden Ansprüche, **dadurch gekennzeichnet, dass** der Grundkörper (201) ein Strangusselement ist.

6. Batteriesystem (200) nach einem der vorhergehenden Ansprüche, **dadurch gekennzeichnet, dass** das Batteriegehäuse Aluminium umfasst.

7. Verfahren (400) zur homogenen Temperaturverteilung innerhalb eines Batteriesystems nach einem der Ansprüche 1 bis 6,
**dadurch gekennzeichnet, dass** der mindestens eine Lüfter in Abhängigkeit einer Schwellenwertüberschreitung der Temperaturen der einzelnen Batteriezellen vom Batteriemanagementsystem angesteuert wird.

8. Verwendung eines Batteriesystems (200) nach einem der Ansprüche 1 bis 6 in einem Elektrofahrzeug, insbesondere einem elektrisch betriebenen Zweirad.

9. Fahrzeug, insbesondere ein elektrisch betriebenes Zweirad, mit einem Batteriesystem (200) nach einem der Ansprüche 1 bis 6.

## Claims

1. Battery system (200) having
• a metal battery housing which comprises a main body (201), a first cover element (202) and a second cover element (203), wherein the first cover element (202) closes a first open end face of the main body (201) and the second cover element (203) closes a second open end face of the main body (201) in an airtight manner with respect to the environment,
• a battery cell holder (204) which has a plurality of battery cells (205), wherein the battery cell holder (204) is arranged within the battery housing, and
• a battery management system (109) which is configured to monitor the plurality of battery cells (205) and to record the temperatures of the individual battery cells (205),
• wherein at least one fan (206) is arranged within the battery housing and the at least one fan (206) can be actuated by the battery management system (109) as a function of the temperatures of the individual battery cells (205) exceeding a threshold value,
**characterized in that**
the at least one fan (206) is arranged on the battery cell holder (204).

2. Battery system (200) according to Claim 1, **characterized in that** the at least one fan (206) is arranged between the battery housing and the battery cell holder (204).

3. Battery system (200) according to any of the preceding claims, **characterized in that** the at least one fan (206) is a radial fan.

4. Battery system (200) according to any of the preceding claims, **characterized in that** the second cover element (203) has at least one further fan.

5. Battery system (200) according to any of the preceding claims, **characterized in that** the main body (201) is an extruded element.

6. Battery system (200) according to any of the preceding claims, **characterized in that** the battery housing comprises aluminium.

7. Method (400) for homogeneous temperature distribution within a battery system according to any of Claims 1 to 6,
**characterized in that** the at least one fan is actuated by the battery management system as a function of the temperatures of the individual battery cells exceeding a threshold value.

8. Use of a battery system (200) according to any of Claims 1 to 6 in an electric vehicle, in particular an electrically operated two-wheeled vehicle.

9. Vehicle, in particular an electrically operated two-wheeled vehicle, having a battery system (200) according to any of Claims 1 to 6.

## Revendications

1. Système de batterie (200) comprenant
• un boîtier de batterie métallique qui comporte un corps principal (201), un premier élément de recouvrement (202) et un second élément de recouvrement (203), le premier élément de recouvrement (202) fermant une première face frontale ouverte du corps principal (201) et le second élément de couvercle (203) fermant une deuxième face frontale ouverte du corps de base (201) de manière étanche à l'air par rapport à l'environnement,
• un support d'éléments de batterie (204), qui comporte une pluralité d'éléments de batterie (205), le support d'éléments de batterie (204) étant disposé à l'intérieur du boîtier de batterie, et
• un système de gestion de batterie (109), qui est conçu pour surveiller la pluralité d'éléments de batterie (205) et pour détecter les températures des éléments de batterie (205) individuels,
• au moins un ventilateur (206) étant disposé à l'intérieur du boîtier de batterie et ledit au moins un ventilateur (206) pouvant être commandé par le système de gestion de batterie (109) en fonction d'un dépassement de valeur seuil des températures des éléments de batterie (205) individuels,
**caractérisé en ce que**
le ventilateur (206) est disposé sur le support d'éléments de batterie (204).

2. Système de batterie (200) selon la revendication 1, **caractérisé en ce que** ledit au moins un ventilateur (206) est disposé entre le boîtier de batterie et le support d'éléments de batterie (204).

3. Système de batterie (200) selon l'une des revendications précédentes, **caractérisé en ce que** ledit au moins un ventilateur (206) est un ventilateur radial.

4. Système de batterie (200) selon l'une des revendications précédentes, **caractérisé en ce que** le second élément de recouvrement (203) comporte au moins un autre ventilateur.

5. Système de batterie (200) selon l'une des revendications précédentes, **caractérisé en ce que** le corps de base (201) est un élément coulé en continu.

6. Système de batterie (200) selon l'une des revendications précédentes, **caractérisé en ce que** le boîtier de batterie comprend de l'aluminium.

7. Procédé (400) de répartition homogène de la température à l'intérieur d'un système de batterie selon l'une des revendications 1 à 6,
**caractérisé en ce que** ledit au moins un ventilateur est commandé par le système de gestion de batterie en fonction d'un dépassement de valeur seuil des températures des éléments de batterie individuels.

8. Utilisation d'un système de batterie (200) selon l'une des revendications 1 à 6 dans un véhicule électrique, en particulier un un deux-roues électrique.

9. Véhicule, en particulier un deux-roues électrique, comportant un système de batterie (200) selon l'une des revendications 1 à 6.
